# EUROPÄISCHE PATENTSCHRIFT

(11) **EP 0 614 933 B1**
(45) Veröffentlichungstag und Bekanntmachung des Hinweises auf die Patenterteilung: **10.06.1998**
(21) Anmeldenummer: 94103288.0
(22) Anmeldetag: 04.03.1994
(51) Int. Cl.: C08K 3/22, C08K 5/3492, C08K 13/04, C08L 77/00

(54) **Halogenfreie flammgeschützte thermoplastische Polyamidformmassen**
Halogen-free, flame retardant thermoplastic polyamide compositions
Compositions de polyamide thermoplastique, résistant à la flamme et exempte d'halogène

(30) Priorität: 11.03.1993 DE 4307682
(43) Veröffentlichungstag der Anmeldung: 14.09.1994
(73) Patentinhaber: BASF Aktiengesellschaft, 67063 Ludwigshafen (DE)
(72) Erfinder: Baierweck, Petra, Dr., D-67459 Boehl-Iggelheim (DE); Gareiss, Brigitte, Dr., D-67071 Ludwigshafen (DE); Ulmerich, Karlheinz, D-67245 Lambsheim (DE); Gall, Michael, D-68165 Mannheim (DE); Koetting, Manfred, D-67112 Mutterstadt (DE)

(56) Entgegenhaltungen:
- EP-A- 0 122 697
- EP-A- 0 278 555
- EP-A- 0 335 165
- EP-A- 0 571 241

## Beschreibung

Die Erfindung betrifft flammgeschützte thermoplastische Formmassen enthaltend

| | | |
|---|---|---|
| A) | 40 bis 98 Gew.-% | eines thermoplastischen Polyamids |
| B) | 0,5 bis 30 Gew.-% | Melamincyanurat |
| C) | 0,5 bis 50 Gew.-% | ein mit einer Silanverbindung vorbehandeltes Magnesiumhydroxid |
| D) | 1 bis 50 Gew.-% | eines faser- oder teilchenförmigen Füllstoffes oder deren Mischungen, welcher verschieden von B) und C) ist, |
| E) | 0 bis 30 Gew.-% | übliche Zusatzstoffe oder Verarbeitungshilfsmittel. |

Weiterhin betrifft die Erfindung die Verwendung der erfindungsgemäßen Formmassen zur Herstellung von Fasern, Folien und Formkörpern sowie die daraus erhältlichen Formkörper.

Aus der JP-A 51/68651 und der DE-A 26 24 065 sowie der EP-A 335 165 sind Herstellung von Magnesiumhydroxid und dessen Verwendung zur Flammschutzausrüstung von Thermoplasten bekannt.

Melamincyanurat als Flammschutzmittel für Polyamide, gegebenenfalls in Kombination mit Füllstoffen, sind aus der JA-A 53/51250, JP-A 54/118454, JP-A 54/16565 und DE-A 27 40 092 bekannt.

Die Kombination von rotem Phosphor mit Melamincyanurat zur Flammschutzausrüstung von Polyamiden ist aus der EP-A 19 768 bekannt.

Derartige Polyamide sind insbesondere für Außenanwendungen nur begrenzt einsetzbar, da die Eigenfarbe des roten Phosphors keine beliebigen Farbeinstellungen zuläßt, weiße oder naturfarbene Formkörper sind auch bei Zugabe von Weißpigmenten oder Farbstoffen nicht herstellbar.

Polyamide, welche mit mineralischen Füllstoffen ausgerüstet sind, können mit Melamincyanurat flammfest ausgerüstet werden. Formkörper aus diesen Formmassen zeigen jedoch unbefriedigende mechanische Eigenschaften, insbesondere lassen Steifigkeit und Festigkeit zu wünschen übrig. Für einige Anwendungen ist es darüber hinaus erforderlich, das die Glühdrahtprüfung gemäß IEC 336 und IEC 1058 bei Temperaturen größer 650°C ohne Flammbildung bestanden werden muß. Diese Voraussetzungen erfüllen mineralgefüllte mit Melamincyanurat ausgerüstete Polyamide nicht.

Der Zusatz von Glasfasern zur Verbesserung der mechanischen Eigenschaften wirkt sich allgemein nachteilig auf die Flammschutzeigenschaften aus, da Glasfasern bedingt durch den sog. Dochteffekt den Flammschutz drastisch verschlechtern. Entsprechend können glasfaserhaltige Polyamide mit Melamincyanurat nicht flammfest ausgerüstet werden.

Der vorliegenden Erfindung lag daher die Aufgabe zugrunde, flammgeschützte thermoplastische Formmassen zur Verfügung zu stellen, welche gute mechanische Eigenschaften und einen guten Flammschutz aufweisen sollen. Insbesondere sollte der Zusatz von Glasfasern einen Flammschutz ermöglichen, welcher die Einstufung Glühdrahtprüfung oberhalb 650°C ohne Flammbildung ermöglicht. Zusätzlich sollten die Formkörper gute elektrische Eigenschaften aufweisen.

Demgemäß wurden die eingangs definierten Fommassen gefunden.

Bevorzugte Ausführungsformen sind den Unteransprüchen zu entnehmen.

Als Komponente A) enthalten die erfindungsgemäßen Formmassen 40 bis 98, bevorzugt 50 bis 89 und insbesondere 60 bis 75 Gew.-% eines thermoplastischen Polyamids.

Die Polyamide der erfindungsgemäßen Formmassen weisen im allgemeinen eine relative Viskosität ηᵣₑₗ von 1,7 bis 5,0 auf, bestimmt in einer 1 gew.-%-igen Lösung in 96 gew.%iger Schwefelsäure bei 25°C, was einem K-Wert (nach Fikentscher) von 50 bis 96 entspricht. Polyamide mit einer relativen Viskosität von 2,3 bis 4,5, insbesondere von 2,5 bis 4,0 werden bevorzugt verwendet.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Derartige teilaromatische, teilkristalline Copolyamide sind aufgebaut aus:
A₁) 20 - 90 Gew.-% Einheiten, die sich von Terephthalsäure und Hexamethylendiamin ableiten,
A₂) 0 - 50 Gew.-% Einheiten, die sich von ε-Caprolactam ableiten und
A₃) 0 - 80 Gew.-% Einheiten, die sich von Adipinsäure und Hexamethylendiamin ableiten,
A₄) 0 - 40 Gew.-% weiteren polyamidbildenden Monomeren,
wobei der Anteil der Komponente (A₂) oder (A₃) oder (A₄) oder deren Mischungen mindestens 10 Gew.-% beträgt.

Die Komponente A1) enthält 20 - 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von ε-Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von ε-Caprolactam ableiten, beträgt maximal 50 Gew.-%, vorzugsweise 20 bis 50 Gew.-%, insbesondere 25 bis 40 Gew.-%, während der Anteil an Einheiten die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten A₁) und 20 bis 50, vorzugsweise 25 bis 40 Gew.-% Einheiten, die sich von ε-Caprolactam ableiten (Einheiten A₂)) enthalten, erwiesen.

Neben den vorstehend beschriebenen Einheiten A₁) bis A₃) können die teilaromatischen Copolyamide in Mengen bis 40, vorzugsweise 10 - 30 Gew.-% und insbesondere 20 - 30 Gew.-% an weiteren polyamidbildenden Monomeren A₄) enthalten; wie sie von anderen Polyamiden bekannt sind.

Aromatische Dicarbonsäuren A₄) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure, Phenoxyterephthalsäure, wobei Isophtalsäure besonders bevorzugt sind.

Weitere polyamidbildende Monomere A₄) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, ω-Aminoundecansäure und Laurinlactam als Vertreter von Lactamen bzw. Aminocarbonsäuren genannt.

Hierbei sind folgende Zusammensetzungen der Komponente (A) besonders bevorzugt:
A₁) 65 bis 85 Gew.-% Einheiten, die sich von Terephthalsäure und Hexamethylendiamin ableiten und
A₄) 15 bis 35 Gew.-% Einheiten, die sich von Isophthalsäure und Hexamethylendiamin ableiten
oder
A₁) 50 bis 70 Gew.-% Einheiten, die sich von Terephthalsäure und Hexamethylendiamin ableiten und
A₃) 10 bis 20 Gew.-% Einheiten, die sich von Adipinsäure und Hexamethylendiamin ableiten und
A₄) 20 bis 30 Gew.-% Einheiten, die sich von Isophthalsäure und Hexamethylendiamin ableiten.

Enthält die Komponente (A₄) symmetrische Dicarbonsäuren, bei denen die Carboxylgruppen in para-Stellung stehen, so empfiehlt es sich, diese mit (A₁) und (A₂) oder (A₁) und (A₃) als ternäre Copolyamide aufzubauen, da andernfalls das Copolyamid einen zu hohen Schmelzpunkt aufweist und nur unter Zersetzung schmilzt, was nicht wünschenswert ist.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Die Herstellung der bevorzugten teilaromatischen Copolyamide mit niedrigem Triamingehalt kann nach den in den EP-A 129 195 und 129 196 beschriebenen Verfahren erfolgen.

Als Komponente B) enthalten die erfindungsgemäßen thermoplastischen Formmassen 0,5 bis 30, bevorzugt 1 bis 20, und insbesondere 5 bis 20 Gew.-% Melamincyanurat als Flammschutzmittel.

Das gemäß der Erfindung (Komponente B) verwendete Melamincyanurat ist ein Reaktiongsprodukt aus vorzugsweise äquimolaren Mengen von Melamin (Formel I) und Cyanursäure bzw. Isocyanursäure (Formeln IIa und IIb)

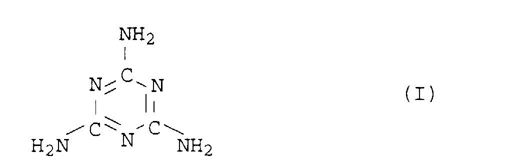

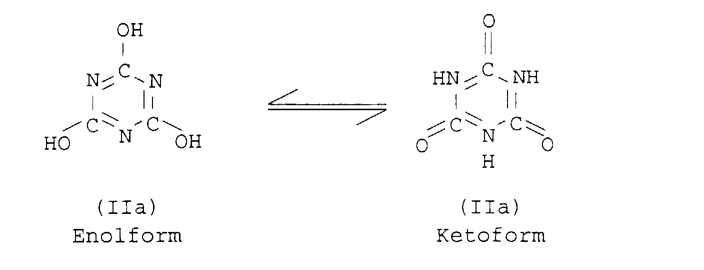

Man erhält es z.B. durch Umsetzung von wäßrigen Lösungen der Ausgangsverbindungen bei 90 bis 100°C. Das im Handel erhältliche Produkt ist ein weißes Pulver mit einer mittleren Korngröße d₅₀ von 69 µm.

Als Komponente C) enthalten die erfindungsgemäßen Formmassen 0,5 bis 50, vorzugsweise 5 bis 40 und insbesondere 10 bis 30 Gew.-% eines mit einer Silanverbindung vorbehandeltes Magnesiumhydroxids als Flammschutzmittel.

Die im Handel erhältlichen Produkte sind plättchenförmige Feststoffe und weisen im allgemeinen eine spezifische Oberfläche, bestimmt nach der BET Methode gemäß DIN 66 131 im Bereich von 5 bis 100 m²/g, bevorzugt von 5 bis 20 und insbesondere von 8 bis 12 m²/g auf. Die mittlere Teilchengröße beträgt im allgemeinen von 0,4 bis 20 µm, bevorzugt von 0,5 bis 2 µm und insbesondere von 0,8 bis 1,5 µm.

Herstellverfahren sind dem Fachmann bekannt, so daß weitere Einzelheiten sich erübrigen.

Durch die Silanisierung kann mit einer geringeren Menge Mg(OH)₂ die gewünschte V-O Einstufung gemäß UL 94 erreicht werden. Zusätzlich lassen sich günstigere mechanischen Eigenschaften (insbesondere die Schlagzähigkeit) der Formkörper erzielen.

Geeignete Silanverbindungen sind solche der allgemeinen Formel III

(X-CH₂)ₙ)_{K}-Si-(O-CₘH₂ₘ₊₁)_{4-K} III

in der die Substituenten folgende Bedeutung haben:
- X: NH₂-; 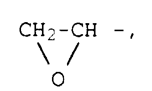 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf C) zur Oberflächenbeschichtung eingesetzt.

Als weiteren Bestandteil enthalten die erfindungsgemäßen thermoplastischen Formmassen 1 bis 50, vorzugsweise 15 bis 35, insbesondere 10 bis 20 Gew.% eines faser- oder teilchenförmigen Füllstoffes (Komponente (D)) oder deren Mischungen, welcher verschieden von B) und C) ist.

Bevorzugte faserförmige Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 mm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Neben den wesentlichen Komponenten A) bis D) können die erfindungsgemäßen Formmassen übliche Zusatzstoffe und Verarbeitungshilfsmittel E) enthalten. Deren Anteil beträgt im allgemeinen bis zu 30, vorzugsweise bis zu 15 Gew.-%, bezogen auf das Gesamtgewicht der Komponenten (A) bis (E).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 1, bevorzugt bis 0,6 und insbesondere bis 0,4 Gew.-% enthalten. Derartige Pigmente sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Nuancierung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu,(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Als Komponente (E) können die erfindungsgemäßen thermoplastischen Formmassen 0 bis 30, vorzugsweise 5 bis 20 und insbesondere 5 bis 15 Gew.-% eines kautschukelastischen Polymerisats enthalten. Bevorzugte kautschukelastische Polymerisate sind Polymerisate auf Basis von Olefinen, die aus folgenden Komponenten aufgebaut sind:
e₁) 40-100 Gew.-% mindestens eines α-Olefins mit 2-8 C-Atomen
e₂) 0-50 Gew.-% eines Diens
e₃) 0-45 Gew.-% eines C₁-C₁₂-Alkylesters der Acrylsäure oder Methacrylsäure oder Mischungen derartiger Ester,
e₄) 0-40 Gew.-% einer ethylenisch ungesättigen Mono- oder Dicarbonsäure oder einem funktionellen Derivat einer solchen Säure
e₅) 0-40 Gew.-% eines Epoxygruppen enthaltenden Monomeren,
e₆) 0-5 Gew.-% sonstiger radikalisch polymerisierbaren Monomerer,
   mit der Maßgabe, daß die Komponente (E) kein Olefinhomopolymerisat ist.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI+4/100°C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere e₂) für EPDM-Kautschuke seien beispielsweise konjugiert Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von a-Olefinen mit 2-8 C-Atomen, insbesondere des Ethylens, mit C₁-C₁₈-Alkylestern der Acrylsäure und/oder Methacrylsäure.

Grundsätzlich eignen sich alle primären und sekundären C₁-C₁₈-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester e₃) an den Olefinpolymerisaten beträgt 0-60, vorzugsweise 10-50 und insbesondere 30-45 Gew.-%.

Anstelle der Ester e₃) oder zusätzlich zu diesen können in den Olefinpolymerisaten auch säurefunktionelle und/oder latent säurefunktionelle Monomere ethylenisch ungesättigter Mono- oder Dicarbonsäuren e₄) oder Epoxygruppen aufweisende Monomere e₅) enthalten sein.

Als Beispiele für Monomere e₄) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut.

R¹C(COOR²)=C(COOR³)R⁴ (I)

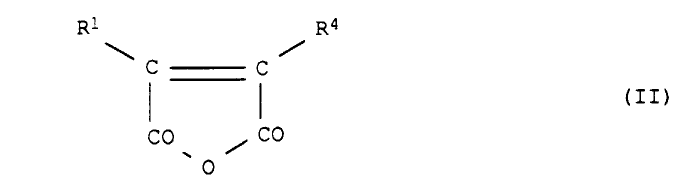

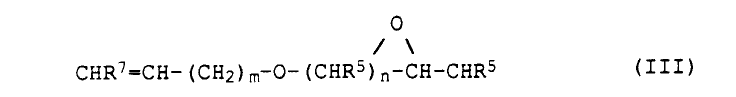

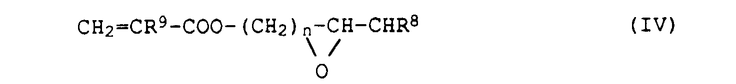

wobei die Reste R¹ - R⁹ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für R1 - R7 ist Wasserstoff, für m der Wert 0 oder 1 und für n der Wert 1. Die entsprechenden Verbindungen sind Maleinsäure, Fumarsäure, Maleinsäureanhydrid, e₄) bzw. Alkenylglycidylether oder Vinylglycidylether e₅).

Bevorzugte Verbindungen der Formeln I, II, III und IV sind Maleinsäure und Maleinsäureanhydrid als Komponente e₄) und Epoxygruppen-enthaltende Ester der Acrylsäure und/oder Methacrylsäure, wobei Glycidylacrylat und Glycidylmethacrylat (als Komponente e₅) besonders bevorzugt werden.

Der Anteil der Komponenten e₄) bzw. e₅) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus

| | |
|---|---|
| 50 bis 98,9 | insbesondere 60 bis 95 Gew.% Ethylen, |
| | |
| 0,1 bis 20, | insbesondere 0,15 bis 15 Gew.% Glycidylacrylat und/oder Glycidylmethacrylat, Acrylsäure und/oder Maleinsäureanhydrid, |
| | |
| 1 bis 45, | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i-Butylester.

Als sonstige Monomere es) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Außer den vorstehenden bevorzugten kautschukelastischen Polymerisaten auf Basis von Olefinen eignen sich als Elastomere (E) beispielsweise Emulsionspolymerisate, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung der Elastomeren seien Acrylate wie n-Butylacrylat und 2-Ethylhexylacrylat, entsprechende Methacrylate, sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Vorteilhaft ist die Verwendung von Emulsionspolymerisaten, die an der Oberfläche reaktive Gruppen aufweisen. Derartige Gruppen sind z.B. Epoxy-, Carboxyl-, latente Carboxyl-, Amino- oder Amidgruppen.

Auch die in der EP-A 208 187 beschriebenen Pfropfmonomeren sind zur Einführung reaktiver Gruppen an der Oberfläche geeignet.

Weiterhin können die Emulsionspolymerisate ganz oder teilweise vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können pfropfvernetzende Monomere verwendet werden, d.h. Monomere mit zwei oder mehr polymerisierbaren Doppelbindungen, die bei der Polymerisation mit unterschiedlichen Geschwindigkeiten reagieren.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (E) bis zu 5 Gew.%, vorzugsweise nicht mehr als 3 Gew.%, bezogen auf (E).

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere und Pfropfpolymerisate mit einem inneren Kern aus n-Butylacrylat und einer äußeren Hülle aus den vorstehend genannten Copolymeren.

Die beschriebenen Elastomere (E) können auch nach anderen üblichen Verfahren, z.B. durch Suspensionspolymerisation, hergestellt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabendermühlen oder Banbury-Mühlen mischt und anschließend extrudiert. Nach der Extrusion wird das Extrudat abgekühlt und zerkleinert.

Die erfindungsgemäßen Formmassen zeichnen sich durch gute elektrische Eigenschaften (Kriechstromfestigkeit und Wärmeleitfähigkeit) sowie durch sehr gute Flammschutzeigenschaften (insbesondere wird die Glühdrahtprüfung oberhalb 650°C ohne Flammbildung bestanden) aus. Darüber hinaus zeigen Formkörper gute mechanische Eigenschaften wie Steifigkeit, E-Modul und Schlagzähigkeit. Bei der Verarbeitung ist insbesondere der geringe Längenausdehnungskoeffizient vorteilhaft.

Deshalb eignen sie sich zur Herstellung von Fasern, Folien und Formkörper, welche insbesondere in der Elektroindustrie Anwendung finden.

### Beispiele

Es wurden folgende Komponenten eingesetzt:

### Komponente A/1

Polyamid-6.6 (Polyhexamethylenadipinsäureamid) mit einer Viskositätszahl von 151 ml/g, entsprechend einer relativen Viskosität ηrel von 2,7 (gemessen in 96 gew.-%iger H₂SO₄ als 0,5 gew.-%ige Lösung bei 25°C nach ISO 307).

### Komponente A/2

Polyamid 6 (Poly-ε-Caprolactam) mit einer Viskositätszahl von 145 ml/g.

### Komponente B

Melamincyanurat (Chemie Linz, AT) mit einer Korngröße (d₅₀) von 69 µm.

### Komponente C

Aminosilanisiertes Magnesiumhydroxid (Magnifin® H 10B der Martinswerke GmbH, DE)

Spezifische Oberfläche (BET): 7,5 - 9,5 m²/g

### Komponente D/1

Glasfasern mit einem mittleren Durchmesser von 10 µm; aminosilanisierte Oberfläche.

### Komponente D/2

Wollastonit der mittleren Teilchengröße (d₅₀) von 3,5 µm.

### Herstellung der Formmassen

Die Komponenten A) bis F) wurden auf einen Zweischneckenextruder (120 U/min; 30 kg/h) bei 280°C konfektioniert, verstrangt und im Wasserbad gekühlt sowie granuliert. Das Granulat wurde bei 80°C im Vakuum getrocknet und bei 280°C zu Normprüfkörpern auf einer Spritzgußmaschine verarbeitet.

Die Bestimmung der Kriechstromfestigkeit (CTI) erfolgte nach DIN 112, ASTM-D 3638.

Die Zugfestigkeit wurde nach DIN 53 455, der E-Modul nach DIN 54 457, die Schlagzähigkeit nach DIN 53 453 und die Reißdehnung nach ISO 527 bestimmt.

Die Glühdrahtprüfung erfolgte nach IEC 695-21, wobei die Angaben 1, 2 bzw. 3 mm der Stärke des Prüfkörpers entsprechen.

Die Zusammensetzung der Formmassen und die Ergebnisse der Messungen sind der Tabelle zu entnehmen.

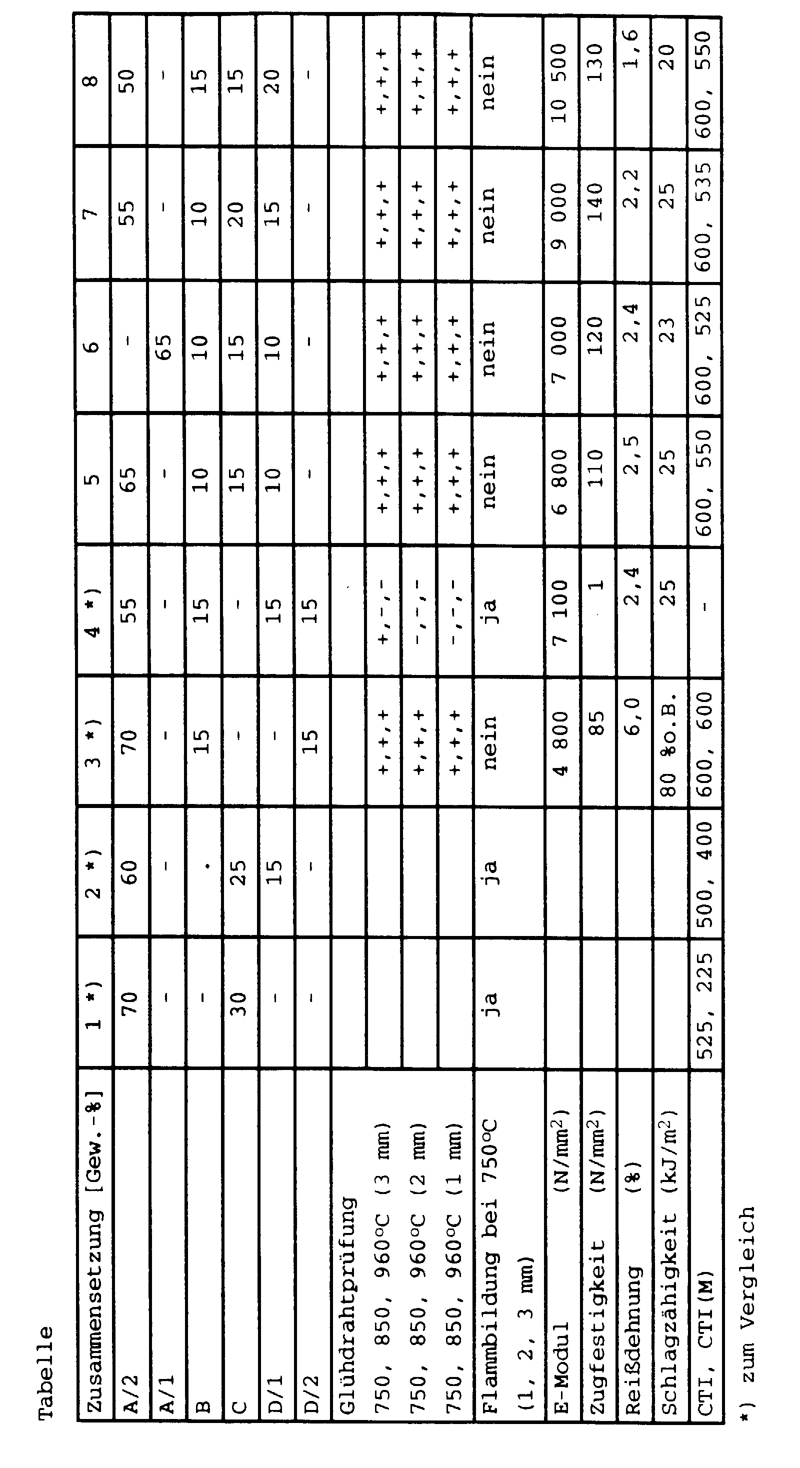

## Patentansprüche

1. Flammgeschützte thermoplastische Formmassen enthaltend
| | | |
|---|---|---|
| A) | 40 bis 98 Gew.-% | eines thermoplastischen Polyamids |
| B) | 0,5 bis 30 Gew.-% | Melamincyanurat |
| C) | 0,5 bis 50 Gew.-% | ein mit einer Silanverbindung vorbehandeltes Magnesiumhydroxid |
| D) | 1 bis 50 Gew.-% | eines faser- oder teilchenförmigen Füllstoffes oder deren Mischungen, welcher verschieden von B) und C) ist, |
| E) | 0 bis 30 Gew.-% | übliche Zusatzstoffe oder Verarbeitungshilfsmittel. |

2. Flammgeschützte thermoplastische Formmassen nach Anspruch 1, enthaltend
A) 50 bis 89 Gew.-%
B) 1 bis 20 Gew.-%
C) 5 bis 40 Gew.-%
D) 5 bis 35 Gew.-%

3. Flammgeschützte thermoplastische Formmassen nach den Ansprüchen 1 bis 2, in denen die Komponente D) aus Glasfasern oder Wollastonit oder Kaolin oder deren Mischungen aufgebaut ist.

4. Flammgeschützte thermoplastische Formmassen nach den Ansprüchen 1 bis 3, in denen die Komponente A) aus PA 6, PA 66 oder PA 6/6T oder deren Mischungen aufgebaut ist.

5. Verwendung der flammgeschützten thermoplastischen Formmassen gemäß den Ansprüchen 1 bis 4 zur Herstellung von Fasern, Folien und Formkörpern.

6. Formkörper, erhältlich aus den flammgeschützten thermoplastischen Formmassen gemäß den Ansprüchen 1 bis 4.

## Claims

1. A flameproofed thermoplastic molding material containing
| | | |
|---|---|---|
| A) | from 40 to 98% by weight | of a thermoplastic polyamide, |
| | | |
| B) | from 0.5 to 30% by weight | of melamine cyanurate |
| | | |
| C) | from 0.5 to 50% by weight | of a magnesium hydroxide pretreated with a silane compound, |
| | | |
| D) | from 1 to 50% by weight | of a fibrous or particulate filler or of a mixture thereof which differs from B) and C) and |
| | | |
| E) | from 0 to 30% by weight | of conventional additives or processing assistants. |

2. A flameproofed thermoplastic molding material as claimed in claim 1, containing
from 50 to 89% by weight of A),
from 1 to 20% by weight of B),
from 5 to 40% by weight of C) and
from 5 to 35% by weight of D).

3. A flameproofed thermoplastic molding material as claimed in claim 1 or 2, in which component D) is composed of glass fibers or wollastonite or kaolin or a mixture thereof.

4. A flameproofed thermoplastic molding material as claimed in any of claims 1 to 3, in which component A) is composed of polyamide 6, polyamide 66 or polyamide 6/6T or a mixture thereof.

5. The use of a flameproofed thermoplastic molding material as claimed in any of claims 1 to 4 for the production of fibers, films and moldings.

6. A molding obtainable from a flameproofed thermoplastic molding material as claimed in any of claims 1 to 4.

## Revendications

1. Masses à mouler thermoplastiques ignifugées, qui contiennent:
| | | |
|---|---|---|
| A) | 40 à 98% en poids | d'un polyamide thermoplastique, |
| B) | 0,5 à 30% en poids | de cyanurate de mélamine, |
| C) | 0,5 à 50% en poids | d'un hydroxyde de magnésium traité au préalable par un composé du type silane, |
| D) | 1 à 50% en poids | d'une charge fibreuse ou particulaire ou de mélanges de charges de ce genre, qui diffèrent de B) et de C), |
| E) | 0 à 30% en poids | d'additifs ou d'adjuvants de mise en oeuvre usuels. |

2. Masses à mouler thermoplastiques ignifugées selon la revendication 1, qui contiennent :
A) à raison de 50 à 89% en poids
B) à raison de 1 à 20% en poids
C) à raison de 5 à 40% en poids
D) à raison de 5 à 35% en poids

3. Masses à mouler thermoplastiques ignifugées suivant les revendications 1 et 2, dans lesquelles le composant D) est constitué de fibres de verre ou de wollastonite ou de kaolin ou de leurs mélanges.

4. Masses à mouler thermoplastiques ignifugées suivant les revendications 1 à 3, dans lesquelles le composant A) est constitué de PA 6, de PA 66 ou de PA 6/6T ou de leurs mélanges.

5. Utilisation des masses à mouler thermoplastiques ignifugées suivant les revendications 1 à 4 en vue de la fabrication de fibres, de feuilles et d'articles ou corps moulés.

6. Articles ou corps moulés que l'on peut obtenir à partir des masses à mouler thermoplastiques ignifugées suivant les revendications 1 à 4.
